# EUROPEAN PATENT SPECIFICATION

(11) **EP 0 551 754 B1**
(45) Date of publication and mention of the grant of the patent: **15.05.1996**
(21) Application number: 92311613.1
(22) Date of filing: 18.12.1992
(51) Int. Cl.: B60H 1/00

(54) **Air distribution unit**
Luftverteilungseinheit
Ensemble de distribution d'air

(30) Priority: 17.01.1992 GB 9200950
(43) Date of publication of application: 21.07.1993
(73) Proprietor: VALEO CLIMATE CONTROL LIMITED, Ammanford, Dyfed SA18 3ET (GB)
(72) Inventor: Morris, Paul Whittington, Llanelli, Dyfed SA15 1JG (GB)
(74) Representative: Richards, David John

(56) References cited:
- EP-A- 0 266 230
- FR-A- 2 660 254
- US-A- 4 683 913
- US-A- 5 009 392
- US-A- 5 080 140
- PATENT ABSTRACTS OF JAPAN vol. 6, no. 178 (M-155)(1056) 11 September 1982 & JP-A-57 087 709 (NIPPOM DENSO)

## Description

The present invention relates to an air distribution unit for use in motor vehicles.

It is well known to provide ventilation in the form of fresh, cool air or heated air to the interior of a motor vehicle, at particular positions therein. Commonly, it is arranged that air is directed or is selectively directable to the inside surface of the windscreen, so as to provide a demisting effect via vents in the dashboard adjacent a lower edge of the windscreen. It is also generally arranged that air is directable through a vent substantially centrally located in the dashboard to provide ventilation in the region of the passengers, through a vent opening near the floor of the vehicle, and through vents located at opposite sides of the dashboard, adjacent side windows of the vehicle.

Conventionally, an air distribution unit employs a housing in which the outlets of the unit through which air passes into ducts leading to the respective vents are provided with separate valves, to allow their selective opening. Separate means are required for the control of these various separate valves.

The present invention seeks to provide an air distribution unit in which the flow of air therethrough can be controlled by a relatively simple arrangement involving a small number of valves in which effective valve sealing is provided.

US-A-5009392 discloses an air distribution unit for a motor vehicle having a housing defining air inlet and outlets, and an air distribution valve mounted between the inlet and the outlets, the valves comprising a pivotably mounted valve member having a part-cylindrical surface engageable with valve seats on the housing, the valve member being moveable, there being provided means on the valve member at both axial ends thereof adjacent the part-cylindrical surface thereof for cooperation with means on the housing to form a seal.

According to the present invention there is provided an air distribution unit for a motor vehicle comprising a housing defining an air inlet, and first and second air outlets, and an air distribution valve mounted between said inlet and said outlets comprising a pivotably mounted valve member having a part-cylindrical surface engageable with valve seats on the housing, the valve member being moveable so as to totally or partially obturate one or both of said outlets, wherein means are provided on the valve member at both axial ends thereof, adjacent the part-cylindrical surface thereof, which cooperate with means on the housing to form a seal therewith, characterised in that the means on the valve member and the cooperating means on the housing comprise a groove formed in the valve member which groove extends along a circumference of the part-cylindrical surface, and a tongue formed on the housing, which tongue extends into the groove, and is formed integrally with the housing, defining an inwardly directed at least part-circular ring centered about the axis of the valve member; and the valve member is provided with a foam material on the outer part-cylindrical surface thereof, which foam material does not extend entirely over said surface.

Preferably, the housing also defines a third air outlet located upstream of the air distribution valve. In this case, the third outlet may be closed by a flap which is pivotably mounted on the housing, and kinematically connected to the air distribution valve member. This arrangement has the advantage that particularly simple control means can be provided for control of air through the first, second and third air outlets.

Preferably the valve member is movable between a first position in which both first and second outlets are isolated from the inlet, a second position in which said first outlet communicates with the inlet and the second outlet is obturated by the valve member, and a third position in which the second outlet communicates with the inlet and the first outlet is obturated by the valve member, said further valve being adapted to be opened when the valve member is in the first position and closed when the valve member is in the second and third positions.

A control mechanism may be provided to control the positions of the valve member and further valve, control means actuable by a user being linked to the control mechanism by either a mechanical linkage comprising a Bowden-type cable, or, alternatively a servo motor may be provided to effect movement of the control mechanism, with an electrical linkage provided between control means and servo motor.

Preferably, the control mechamism comprises a pivotably mounted lever having at least three radially-extending arms a first arm of which is connected to a gear wheel fixedly connected to a shaft portion of the valve member through a quadrant gear such that rotation of the lever causes rotation of the valve member, a second arm of the lever being connected to a further lever fixed to the flap of the third valve. The second arm of the lever is then connected to the further lever by means of a pin on the second arm of the lever received within a track on the further lever, the lever, further lever and track being arranged so that only movement of the lever between first and second positions which correspond to the first and second positions of the valve member causes a pivoting of the further lever.

This arrangement allows the required valve operation to be achieved particularly simply.

Preferably, the first, second and third air outlets are for connection to respective air ducts which lead air respectively to an air vent located substantially centrally of a vehicle dashboard, an air vent located near a floor of the vehicle, and an air vent located adjacent to the vehicle windscreen. The housing may additionally define at least one further air outlet which is in constant direct communication with the air inlet, for connection to air vents located on both sides of a vehicle dashboard.

Preferably, the housing comprises upper and lower housing parts the pivotal mounting of the valve member being located at cooperating edges of the housing parts. This allows the gear wheel and pivot shaft of the valve member to be unitarily formed, slots at the edges of the housing parts receiving the shaft.

An embodiment of the present invention is described, by way of example only, with reference to the following drawings in which:
Figure 1 is a schematic side elevation of an air distribution unit in accordance with the present invention, in which a valve member thereof is in a first position;
Figure 2 is an end elevation in the direction of the arrow E of Figure 1 of the air distribution unit of Figure 1;
Figure 3 shows the air distribution unit of Figure 1 with the valve member in a second position;
Figure 4 is an end elevation of the air distribution unit as shown in Figure 3;
Figure 5 shows the air distribution unit of Figure 1 with the valve member in a third position;
Figure 6 is an end elevation of the air distribution unit as shown in Figure 5;
Figure 7 is a cross-sectional view taken along the line A-A of Figure 1;
Figure 8 is a cross-sectional view taken along the line D-D of Figure 3;
Figure 9 shows in its upper half a cross-sectional view taken along the line B-B of Figure 1, and in its lower half a cross-sectional view taken along the line C-C of Figure 1;
Figure 10 shows a mechanical linkage by which movement of the valve member and a flap of the air distribution unit is effected, in a configuration in which the valve member is in the first position;
Figure 11 shows the mechanical linkage of Figure 10 in a configuration in which the valve member is in the second position; and,
Figure 12 shows the mechanical linkage of Figure 10 in a configuration in which the valve member is in the third position.

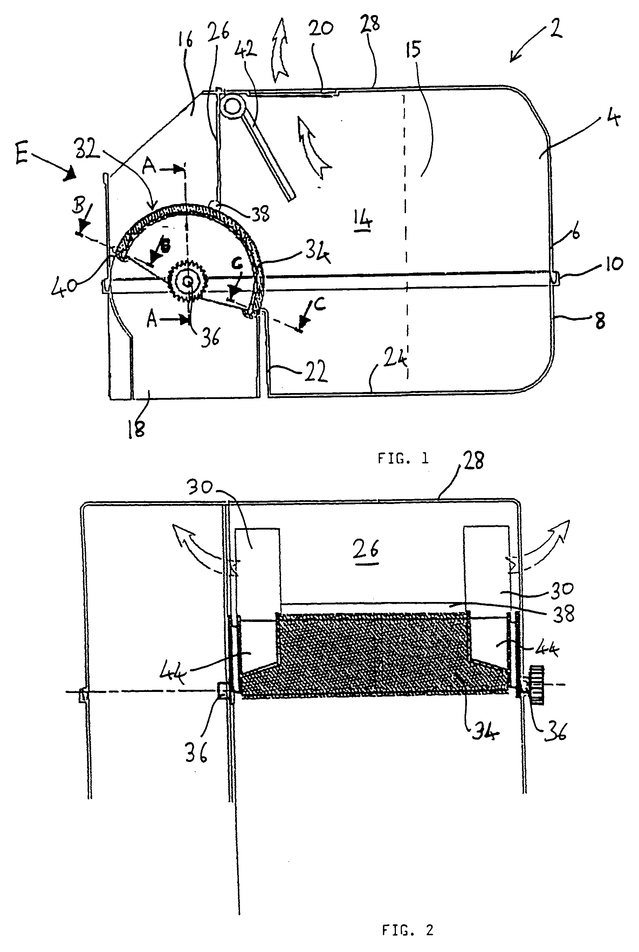

Referring to Figure 1 of the drawings, an air distribution unit 2 in accordance with the invention is illustrated. The air distribution unit 2 comprises a housing 4 having upper and lower housing parts 6,8 connected together by moulded joint portions 10, comprising interlocking tongues and grooves. The housing parts 6 and 8 are preferably formed of moulded plastics. The housing 4 defines an air inlet 12 shown schematically by the dotted lines in Figure 1, arranged in a side of the housing through and which air is introduced into the housing 4, passing into air inlet chamber 14. The housing further defines first, second and third air outlets 16, 18 and 20. In use, the first air outlet 16 is connected to an air duct which leads air to a vent located in the vehicle passenger compartment substantially centrally of the dashboard, hereinafter referred to as the centre vent outlet 16. The second air outlet 18 is in use connected to a duct which leads air into the passenger compartment near the floor of the vehicle, this vent being termed hereinafter feet outlet 18. The third air outlet 20 is in use connected to a duct which leads air to an inner surface of the vehicle windscreen, this outlet being termed hereinafter defrost outlet 20. A heater (not shown) may be arranged within the housing 4 to heat incoming air, whilst means such as are well known in the art may be arranged to control the proportion of air passing through the heater, and thereby the temperature of air which leaves the unit 2.

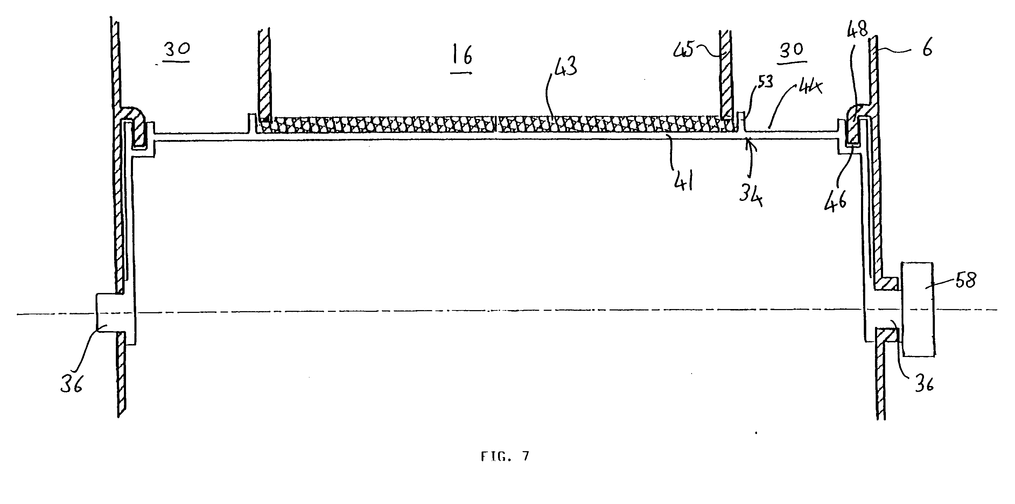

A partition 22 extends upwardly from a floor 24 of the lower housing part 8, and extends across the full width of the housing 4. A further partition 26 depends downwardly from an upper portion 28 of the housing upper part 6. Partition 26 includes further air outlets 30 (best seen in Figures 2 and 7) arranged on both sides of the housing which, in use, are connected to ducts which lead air to side vents located on both sides of the vehicle dashboard, adjacent the vehicle side windows.

An air distribution valve 32 is located within the housing between the centre vent outlet 16 and feet outlet 18 and the air inlet chamber 14, so as to allow control of the flow of air from the air inlet 12 to these outlets.

The defrost outlet 20 is provided with a valve 42 comprising a pivotably mounted flap which can close the outlet 20, to allow control of flow of air to the defrost vent. It is noted that no valve is provided between the side vent outlets 30 and air inlet chamber 14, such that there is constant communication between side vents and the air inlet chamber 14.

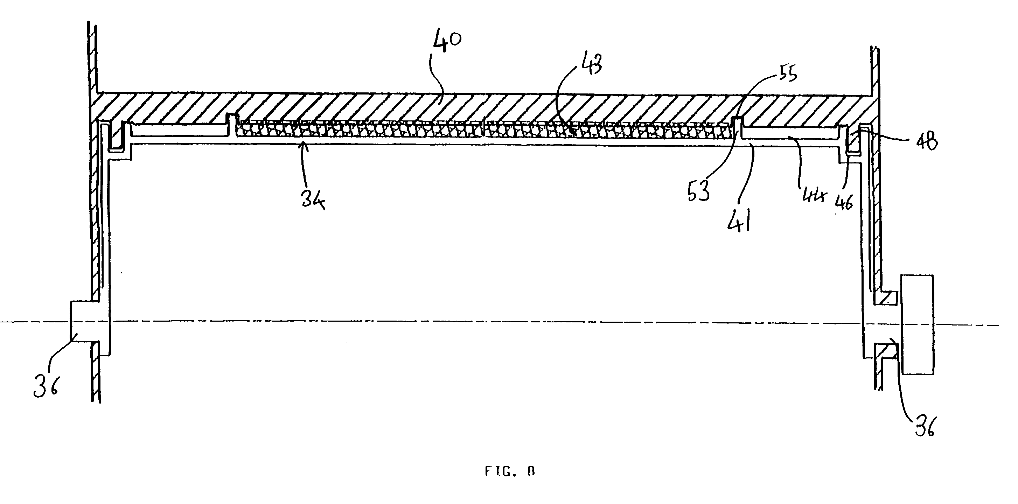

The air distribution valve 32 comprises a valve member 34 having a substantially semi-cylindrical outer surface, and which is pivotably mounted on the housing 4 by means of shaft portions 36, best seen in Figure 8, which extend through apertures provided therefor in the housing 4. A gear wheel 58 is fixedly attached to one of the shafts 36, outside the housing 4, by means of which a drive connection to valve member 34 can be provided. As discussed below, the gear wheel 58 may be integrally formed with the shaft 36. In this case slots must be provided at the cooperating edges of lower and upper housing parts 6, 8 to receive the shaft 36 on assembly of the housing. The valve member 34 is located so that the outer substantially semi-cylindrical surface thereof is engagable with an upper portion of the partition 22, a lower portion of the partition 26 constituted by a plastics bead 38 and a portion 40 formed on the inner surface of the housing 4 between the centre vent outlet 16 and the feet outlet 18, forming an airtight seal with the housing portions 22, 38 and 40. These portions form seats for the valve member 34. The portion 40 constitutes a part-cylindrical valve seat with the axis thereof coincident with pivotal mounting of the valve member 34.

As best seen in the cross-sectional views of Figures 7, 8 and 9, the valve member 34 comprises a hollow substantially semi-cylindrical body 41 over which is arranged a covering of a foam material 43, for example a PVC closed cell foam. The foam material assists in the provision of an airtight seal between the valve member 34, portion 38 of partition 26, partition 22 and valve seat 40 of the housing 4, in that it is arranged that there is a tight engagement between these portions of the housing and the valve member 34 so that the foam material is slightly depressed by the engagement therewith. As can be seen from Figure 2, the foam does not extend entirely over the outer surface of the body portion 41, but is absent from regions 44 on the part-cylindrical surface located near both axial ends of the valve member 34. This is because no seal is required at these regions; these regions correspond to the position of the side vent outlets 30. Further sealing means are provided in the form of moulded circumferentially-extending grooves 46 defined between projecting portions formed at both axial ends of the body portion 41 of the valve member 34, which groove regions 46 receive respective tongue portions 48 formed on the housing 4. The tongues 48 are formed integrally with the housing 4, defining an inwardly-directed ring centered about the axis of pivoting of the valve member. The tongues extend at least from the partition 26 anticlockwise round to the partition 22, to provide an effective seal over the regions of the outlets 16,18. It is noted that the two-part construction of the housing 4 in which the housing parts 6 and 8 are joined along a line passing through the valve member axis is essential so that the valve member can be inserted with the groove 46 thereof, receiving the tongue 48 prior to connection of the housing parts. A further tongue 53 on the body portion 41 may be provided to cooperate with grooves 55 provided on the valve seat 40.

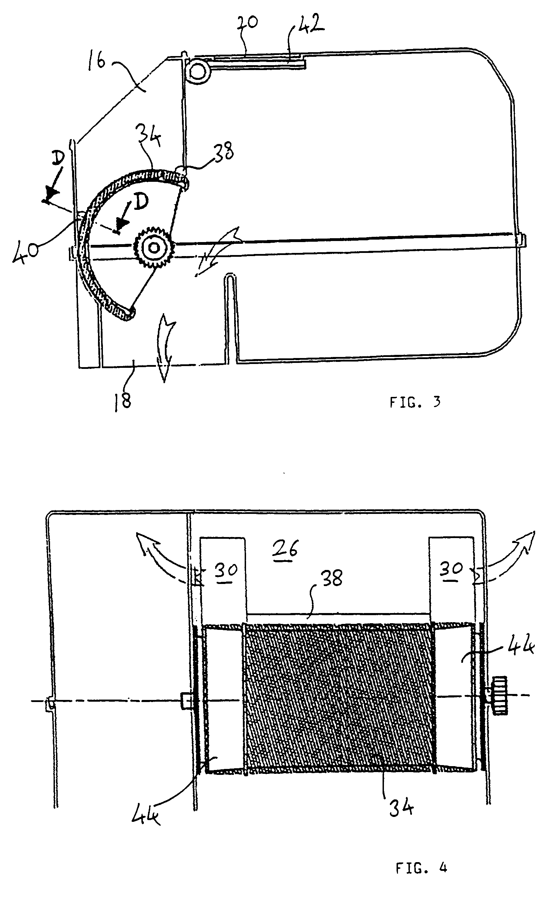

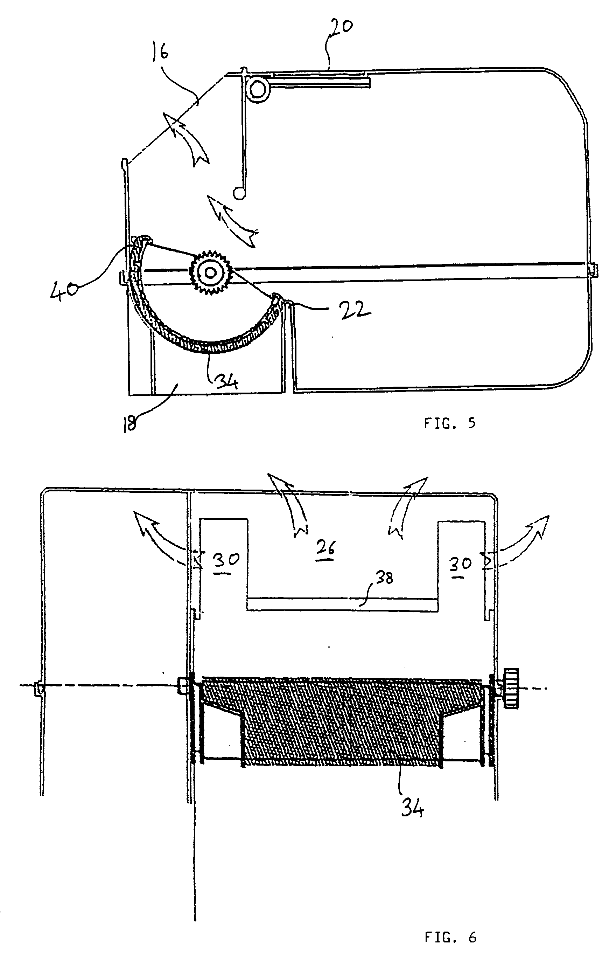

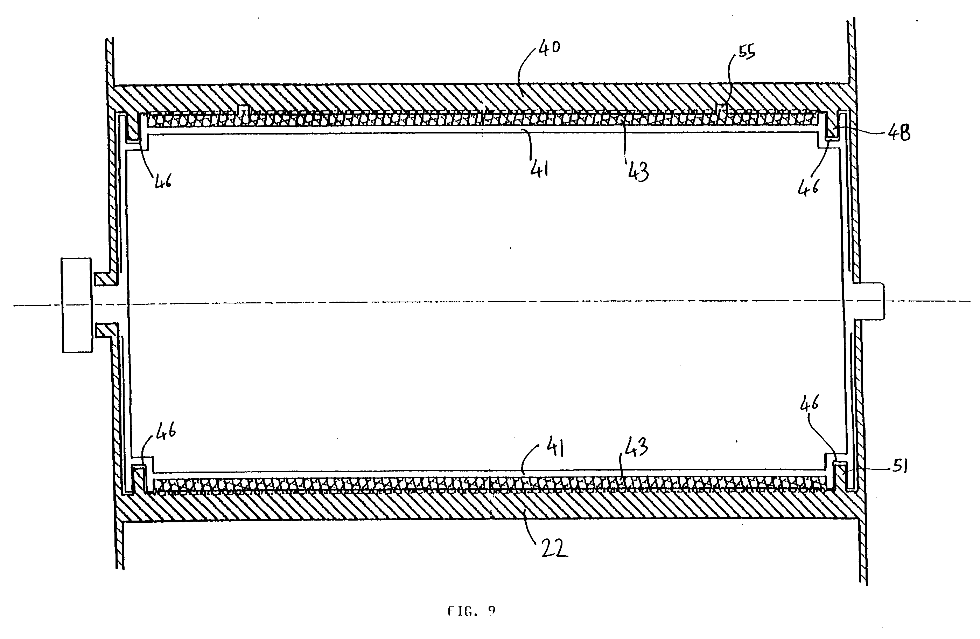

Direction of the air flow to the centre vent outlet 16, feet outlet 18 or defrost outlet 20 is controlled by means of the air distribution valve 32 and the defrost outlet valve 42, the precise air flow being dependent on the positions of these valves. The positions of valves 32 and 42 is controlled by a user in a manner as discussed later. The distribution of air which can be achieved with the air distribution unit 2 is now discussed with reference to Figures 1 to 9. Figures 1 and 2 show the air distribution valve 32 in a first position in which the valve member 34 engages both partitions 26 and 22, thereby preventing flow of air into either of the centre vent outlet 16 or feet outlet 18. With the air distribution valve member 34 in this position, the defrost valve 42 is arranged to be open (by a mechanism described below), so that air is directed through only the defrost outlet 20 and side vent outlets 30 (which are permanently open, as discussed above). Figure 7 shows the sealing engagement between the valve member 34 and housing 4 at the end regions, and with the lower ends of walls 45 (not shown in Figure 2) which separate the centre vent outlet 16 from the side vent outlets 30. Figure 9, upper half, shows the engagement between the valve member 34 and the valve seat 40, whilst at the lower half shows the engagement between the valve member 34 and the top of the partition 22. On rotation of the valve member 34 in an anticlockwise direction from the first position to a second position (shown in Figures 3, 4 and 8), the valve member 34 engages only portion 38 of partition 26 and valve seat 40, whereby the feet outlet 18 is opened, the centre vent outlet 16 remains occluded, and the defrost vent outlet 20 is closed by the valve 42. Figure 8 shows in cross-section the engagement between valve seat 40 of the housing, and the valve member 34. In this position, air is directed to the feet outlet 20 and side vent outlets 30 only. Further rotation of the valve member 34 from the second position to a third position (shown in Figures 5 and 6) results in engagement of the valve member 34 with the partition 22, the valve member 34 remaining engaged with valve seat 40, whereby the feet outlet 18 is occluded, centre vent outlet 16 is opened, with the defrost outlet 20 remaining closed. Thus, in this position, air is directed to the centre vent outlet 16 and side vent outlets 30 only.

At positions intermediate between the first and second positions of the valve member 34, air will be directed to feet and defrost outlets 18 and 20, as well as side vent outlets 30. At positions intermediate between the second and third positions, air will be directed to centre vent outlet 16 and feet outlet 18, as well as to the side vent outlets 30.

The control means which are actuable by a user are accordingly marked with five settings : DEFROST, DEFROST + FEET, FEET, FEET + CENTRE VENT, CENTRE VENT, corresponding to the three valve positions illustrated, and the intermediate valve positions.

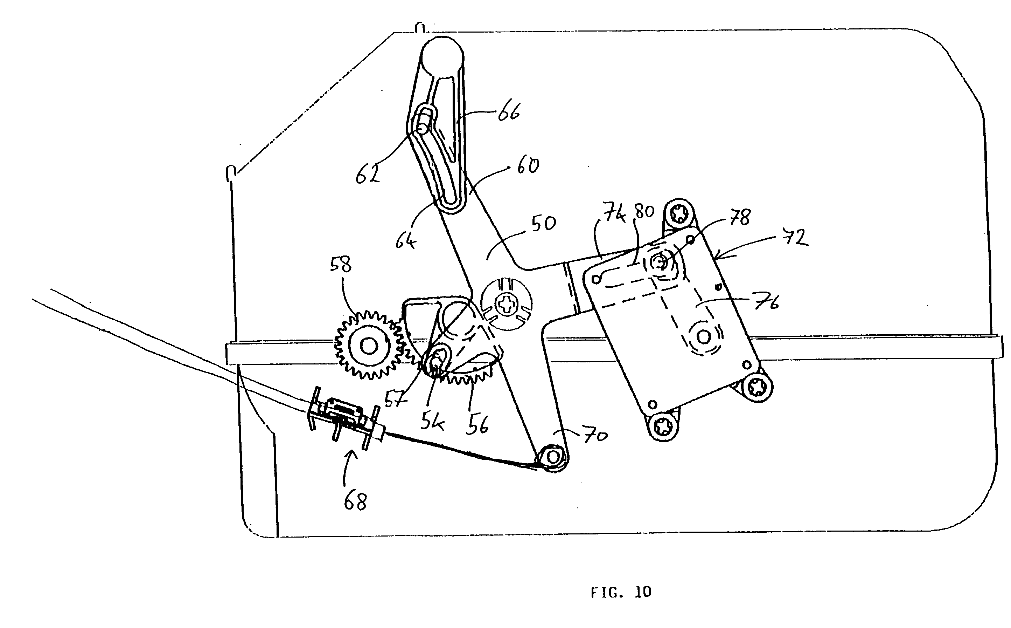

A mechanism by which the appropriate movement of the valve member 34 and valve 42 can be effected is now described with reference to Figures 10 to 12. Central to the mechanism is a drive lever distribution 50 which comprises a member pivotably mounted on the outside of the housing 4 having four radially extending lever arms. A first arm 52 of the drive lever distribution 50 is connected through a pin 54 thereon to a quadrant gear 56, the pin 54 being received in a slot 57 formed in the quadrant gear 56. The quadrant gear 56 is meshed with gear wheel 58 fixedly connected to or, alternatively, integrally formed with one of the shafts 36 of the valve member 34, so that pivoting of the drive lever distribution 50 causes rotation of the valve member 34. A second arm 60 of the drive lever distribution 50 is provided with a pin 62 received within a track 64 of a defrost lever 66 which is pivotably mounted on the housing but fixedly connected to the flap valve 42 through the pivotal mounting thereof.

Movement of the drive lever distribution 50 is effected either mechanically through a Bowden cable 68 connected to a third arm 70 of the drive lever distribution 50, or a servo motor 72 connected to a fourth arm 74 of the drive lever distribution 50. Although both the Bowden-type cable and servo motor are illustrated in Figures 10 to 12, in practice only one or other of these would be utilised. The servo motor 72 is provided with a driven lever 76 which is connected to the arm 74 by a pin 78 received within a cam track 80 of the arm 74. Thus, movement of the drive lever distribution 50 is effected by actuation by the user of control means which are mechanically linked through the Bowden-type cable 68, or linked by an electrical connection from the control means to the servo motor 72.

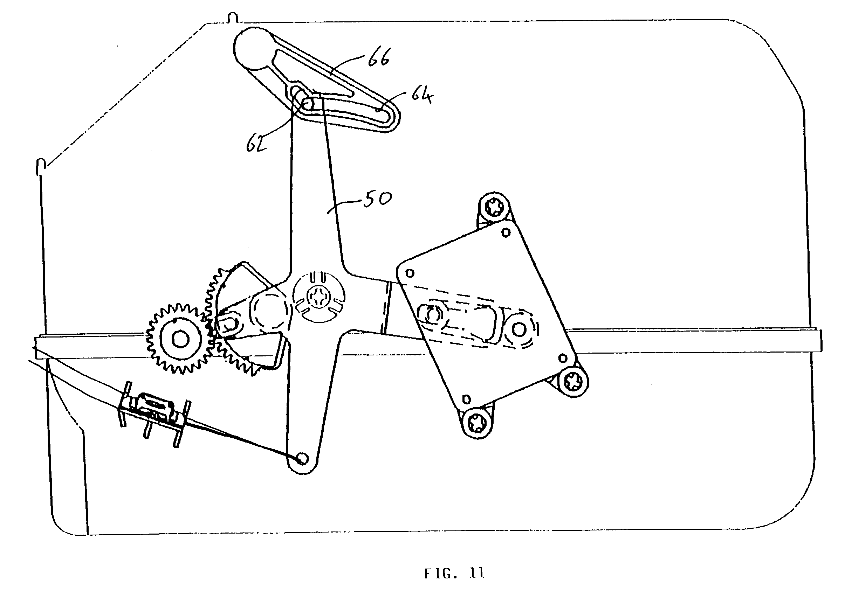

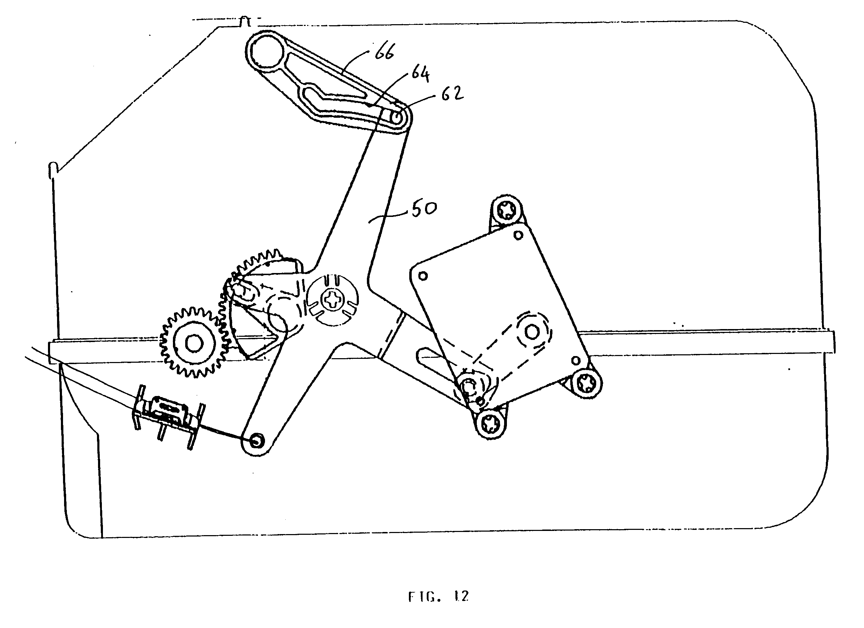

Figure 10 shows the configuration of drive components in a first position which corresponds to the first position which is illustrated in Figures 1 and 2. Clockwise movement of the drive lever distribution 50 into the second position illustrated in Figure 11 results in the anticlockwise rotation of the gear 58, and valve member 34 as discussed above, but also an anticlockwise movement of the defrost lever 66, whereby the flap 42 closes defrost outlet 20 (Figures 3 and 4). The precise arrangement of the defrost lever 66 relative to the drive distribution lever 50 ensures that when the second position is reached, the slot 64 describes an arc of a circle centered on the axis of the drive distribution lever 50. Thus, further anticlockwise rotation of the drive distribution lever 50 to the third position shown in Figure 12 rotates only the valve member 34, and not the defrost lever 66, the pin 62 sliding within the track 64.

The drive distribution lever 50 is preferably made of mild steel, while defrost lever 66, quadrant gear 56, and gear 68 are formed of plastics, although it will be appreciated that a variety of other materials could be utilised. Each of the drive components are preferably mounted on plastics bosses formed integrally with the housing 4.

## Claims

1. An air distribution unit (2) for a motor vehicle comprising a housing (4) defining an air inlet (12), and first and second air outlets (16,18), and an air distribution valve (32) mounted between said inlet and said outlets comprising a pivotably mounted valve member (34) having a part-cylindrical surface engageable with valve seats on the housing, the valve member being moveable so as to totally or partially obturate one or both of said outlets, wherein means are provided on the valve member at both axial ends thereof, adjacent the part-cylindrical surface thereof, which cooperate with means on the housing to form a seal therewith, characterised in that:-
the means on the valve member and the cooperating means on the housing comprise a groove (46) formed in the valve member (34) which groove (46) extends along a circumference of the part-cylindrical surface, and a tongue (48) formed on the housing (4), which tongue extends into the groove, and is formed integrally with the housing, defining an inwardly directed at least part-circular ring centered about the axis of the valve member (34); and
the valve member is provided with a foam material (43) on the outer part-cylindrical surface thereof, which foam material does not extend entirely over said surface.

2. An air distribution unit according to claim 1 wherein the housing defines a third air outlet (16,18,20) located upstream of the air distribution valve closed by a further valve (42).

3. An air distribution unit according to claim 2 wherein the valve member (34) is movable between a first position in which both first and second outlets (16,18) are isolated from the inlet (12), a second position in which said first outlet (16) communicates with the inlet (12) and the second outlet (18) is obturated by the valve member, and a third position in which the second outlet (18) communicates with the inlet (12) and the first outlet is obturated by the valve member, said further valve (42) being adapted to be opened when the valve member (34) is in the first position and closed when the valve member (34) is in the second and third positions.

4. An air distribution unit according to claim 2 wherein the further valve (42) at the third outlet comprises a flap which is pivotably mounted on the housing, and kinematically connected to the air distribution valve member.

5. An air distribution unit according to claim 4 wherein a control mechanism is provided to control the positions of the valve member and further valve, and wherein control means actuable by a user are linked to the control mechanism.

6. An air distribution unit according to claim 5 wherein a mechanical linkage in the form of a Bowden-type cable (68) is provided between the control means and control mechanism.

7. An air distribution unit according to claim 5 wherein a servo motor (72) is provided to effect movement of the control mechanism and an electrical linkage is provided between the control means and servo motor.

8. An air distribution unit according to any one of claims 5 to 7 wherein the control mechanism comprises a pivotably mounted lever (50) having at least three radially-extending arms (52) a first arm of which is connected to a gear wheel (58) fixedly connected to a shaft portion (36) of the valve member through a quadrant gear (56), such that rotation of the lever causes rotation of the valve member (34), a second arm (60) of the lever being connected to a further lever (66) fixed to the flap of the third valve (42).

9. An air distribution unit according to claim 8 wherein the second arm of the lever is connected to the further lever by means of a pin (62) on the second arm of the lever received within a track (64) in the further lever (66), the lever, further lever and track being arranged so that only movement of the lever between first and second positions, which correspond to the first and second positions of the valve member, causes a pivoting of the further lever.

10. An air distribution unit according to any of claims 2-9 wherein the first (16), second (18) and third (20) outlets are for connection to respective air ducts which lead air to respectively, an air vent located substantially centrally of a vehicle dashboard, and air vent located near a vehicle floor, and an air vent adjacent a vehicle windscreen.

11. An air distribution unit according to claim 10 wherein the housing defines at least one further air outlet which is in constant communication with the air inlet, for connection to vents located on both sides of a vehicle dashboard.

12. An air distribution unit according to any preceding claim wherein the housing comprises upper and lower housing parts (6,8), the pivotal mounting of the valve member being located at cooperating edges of the two housing parts.

## Patentansprüche

1. Luftverteilungseinheit (2) für ein Kraftfahrzeug, die ein Gehäuse (4) mit einer Lufteinlaßöffnung (12) und ersten und zweiten Luftauslaßöffnungen (16,18) sowie ein zwischen diesem Ein- und Auslaßöffnungen angeordnetes Luftverteilungsventil (32) mit einem schwenkbar gelagerten Ventilelement (34) umfassen, das eine teilzylindrische und mit Ventilsitzen am Gehäuse zusammenwirkende Oberfläche aufweist und so beweglich ist, daß es eine oder beide der genannten Auslaßöffnungen ganz oder teilweise verschließen kann, wobei dieses Ventilelement an seinen beiden axialen Enden - unmittelbar angrenzend an seine teilzylindrische Oberfläche - Mittel aufweist, die mit an dem Gehäuse vorgesehenen Mitteln dichtend zusammenwirken, **dadurch gekennzeichnet, daß** die an dem Ventilelement vorgesehenen Mittel sowie die mit ihnen zusammenwirkenden, an dem Gehäuse angeordneten Mittel eine in dem Ventilelement (34) ausgebildete Nut (46), die sich um den Umfang der teilzylindrischen Oberfläche erstreckt, sowie eine an dem Gehäuse (4) ausgebildete und in diese Nut hineinragende Zunge (48) umfassen, die einstückig mit dem Gehäuse ausgeführt ist und eine nach innen gerichtete, um die Achse des Ventilelements (34) zentrierten, mindestens teilkreisförmigen Ring bildet, und daß das Ventilelement auf seiner äußeren teilzylindrischen Oberfläche einen Schaumstoffbelag (43) trägt, der sich nicht über diese gesamte Oberfläche erstreckt.

2. Luftverteilungseinheit gemäß Anspruch 1, wobei das Gehäuse eine dritte Luftauslaßöffnung (16,18,20) umfaßt, die in Strömungsrichtung vor dem Luftverteilungsventil liegt und durch ein weiteres Ventil (42) geschlossen wird.

3. Luftverteilungseinheit gemäß Anspruch 2, wobei das Ventilelement (34) beweglich ist zwischen einer ersten Stellung, in der sowohl der erste als auch der zweite Luftauslaß (16,18) vom Einlaß (12) getrennt sind, einer zweiten Stellung, in der der erste Auslaß (16) mit dem Einlaß (12) verbunden, der zweite Auslaß (18) jedoch durch das Ventilelement verschlossen ist, und einer dritten Stellung, in der der zweite Auslaß (18) mit dem Einlaß (12) verbunden, der erste Auslaß dagegen durch das Ventilelement verschlossen ist, wobei das genannte Zusatzventil (42) derart funktioniert, daß es geöffnet ist, wenn sich das Ventilelement (34) in seiner ersten Stellung befindet, und geschlossen ist, wenn das Ventilelement (34) in seiner zweiten und dritten Stellung steht.

4. Luftverteilungseinheit gemäß Anspruch 2, wobei das an der dritten Auslaßöffnung vorgesehene Zusatzventil (42) eine am Gehäuse schwenkbar gelagerte Klappe umfaßt, die mit dem Ventilelement der Luftverteilungseinheit kinematisch verbunden ist.

5. Luftverteilungseinheit gemäß Anspruch 4, wobei eine Steuervorrichtung zur Steuerung der Stellungen des Ventilelementes sowie des Zusatzventils vorgesehen sind, und vom Anwender betätigbare Bedienungselemente mit dieser Steuervorrichtung verbunden sind.

6. Luftverteilungseinheit gemäß Anspruch 5, wobei zwischen dem Bedienungselement und der Steuervorrichtung eine mechanische Verbindung in Form eines Zuges nach Art eines Bowdenzuges (68) vorgesehen ist.

7. Luftverteilungseinheit gemäß Anspruch 5, wobei ein Stellmotor (72) vorgesehen ist, um die Bewegung der Steuervorrichtung auszuführen, und zwischen dem Bedienungselement und dem Stellmotor eine elektrische Verbindung besteht.

8. Luftverteilungseinheit gemäß einem der Ansprüche 5 - 7, wobei die Steuervorrichtung einen schwenkbar gelagerten Hebel (50) umfaßt, der mindestens drei in radialer Richtung verlaufende Arme (52) aufweist, von denen ein erster Arm über ein Zahnradsegment (56) auf ein fest mit einem Wellenteil (36) des Ventilelements verbundenes Zahnrad (58) wirkt, so daß eine Drehung des Hebels auch eine Schwenkung des Ventilelementes (34) bewirkt, während ein zweiter Arm (60) des Hebels mit einem an der Klappe des dritten Ventils (42) angeordneten Zusatzhebel (66) verbunden ist.

9. Luftverteilungseinheit gemäß Anspruch 8, wobei die Verbindung zwischen dem zweiten Arm des Hebels und dem Zusatzhebel über einen am zweiten Arm des Hebels angeordneten Stift (62) erfolgt, der in einer Kulisse (64) an dem Zusatzhebel (66) läuft, und die Anordnung von Hebel, Zusatzhebel und Kulisse so gewählt ist, daß nur eine Bewegung des Hebels zwischen seiner ersten und zweiten Stellung - entsprechend der ersten und zweiten Stellung des Ventilelements - eine Schwenkbewegung des Zusatzhebels bewirkt.

10. Luftverteilungseinheit gemäß einem der Ansprüche 2 - 9, wobei die ersten (16), zweiten (18) und dritten (20) Luftauslaßöffnungen zum Anschluß an jeweilige Luftkanäle vorgesehen sind, die die Luft zu einer im wesentlichen in der Mitte des Fahrzeugarmaturenbretts angeordneten Belüftungsöffnung, einer nahe dem Fahrzeugboden vorgesehenen Belüftungsöffnung bzw. einer im Bereich der Windschutzscheibe angeordneten Belüftungsöffnung führen.

11. Luftverteilungseinheit gemäß Anspruch 10, wobei in dem Gehäuse zusätzlich mindestens ein weiterer Luftauslaß vorgesehen ist, dem ständig mit dem Lufteinlaß verbunden ist und zu Belüftungsöffnungen beiderseits des Fahrzeugarmaturenbrettes führt.

12. Luftverteilungseinheit gemäß einem der vorstehenden Ansprüchem wobei das Gehäuse obere und untere Gehäuseteile (6,8) umfaßt und die schwenkbare Lagerung des Ventilelements an zusammenwirkenden Rändern zweier Gehäuseteile angeordnet ist.

## Revendications

1. Appareil de distribution d'air (2) pour véhicule à moteur, comprenant un boîtier (4) formant une entrée d'air (12) et une première et une deuxième sorties d'air (16, 18), et une vanne de distribution d'air (32) montée entre cette entrée et ces sorties et comprenant un obturateur monté tournant (34) ayant une surface en partie cylindrique pouvant venir en prise avec des sièges prévus sur le boîtier, l'obturateur étant mobile de façon à obturer totalement ou partiellement une des sorties ou les deux, sur l'obturateur étant prévus, à deux extrémités axiales de celui-ci, près de sa surface en partie cylindrique, des moyens qui coopèrent avec des moyens prévus sur le boîtier pour former un joint étanche avec ceux-ci, caractérisé par le fait que
les moyens prévus sur l'obturateur et les moyens coopérants prévus sur le boîtier comprennent une rainure (46) faite dans l'obturateur (34), laquelle rainure (46) s'étend le long d'une circonférence de la surface en partie cylindrique, et une languette (48) faite sur le boîtier (4), laquelle languette s'étend dans la rainure et fait corps avec le boîtier, définissant un anneau circulaire au moins partiel dirigé vers l'intérieur et centré sur l'axe de l'obturateur (34), et
l'obturateur (34) est pourvu d'une matière alvéolaire (43) sur sa surface extérieure en partie cylindrique, laquelle matière alvéolaire ne s'étend pas sur toute cette surface.

2. Appareil de distribution d'air selon la revendication 1, dans lequel le boîtier forme une troisième sortie d'air (20) située en amont de la vanne de distribution d'air et fermée par une autre vanne (42).

3. Appareil de distribution d'air selon la revendication 2, dans lequel l'obturateur (34) est mobile entre une première position dans laquelle les première et deuxième sorties (16, 18) sont isolées de l'entrée (12), une deuxième position dans laquelle la première sortie (16) communique avec l'entrée (12) et la deuxième sortie (18) est obturée par l'obturateur, et une troisième position dans laquelle la deuxième sortie (18) communique avec l'entrée (12) et la première sortie est obturée par l'obturateur, l'autre vanne (42) étant faite pour s'ouvrir lorsque l'obturateur (34) est dans sa première position et se fermer lorsque l'obturateur (34) est dans sa deuxième ou sa troisième position.

4. Appareil de distribution d'air selon la revendication 2, dans lequel l'autre vanne (42) prévue à la troisième sortie comprend un clapet qui est monté tournant sur le boîtier et est relié cinématiquement à l'obturateur de distribution d'air.

5. Appareil de distribution d'air selon la revendication 4, dans lequel un mécanisme de commande est prévu pour la commande des positions de l'obturateur et de l'autre vanne, et dans lequel des moyens de commande actionnables par un utilisateur sont reliés à ce mécanisme de commande.

6. Appareil de distribution d'air selon la revendication 5, dans lequel une liaison mécanique formée d'un câble du type Bowden (68) est prévue entre les moyens de commande et le mécanisme de commande.

7. Appareil de distribution d'air selon la revendication 5, dans lequel un servomoteur (71) est prévu pour produire le mouvement du mécanisme de commande et une liaison électrique est prévue entre les moyens de commande et ce servomoteur.

8. Appareil de distribution d'air selon l'une des revendications 5 à 7, dans lequel le mécanisme de commande comprend un levier monté tournant (50) ayant au moins trois bras s'étendant radialement, un premier bras (52) étant lié par un secteur denté (56) à une roue dentée (58) fixée à une partie tourillon (36) de l'obturateur, de façon que la rotation du levier produise une rotation de l'obturateur (34), un deuxième bras (60) du levier étant lié à un autre levier (66) fixé au clapet de la troisième vanne (42).

9. Appareil de distribution d'air selon la revendication 8, dans lequel le deuxième bras du levier est lié à l'autre levier par une cheville (62) prévue sur le deuxième bras du levier et logée dans une piste (64) faite dans l'autre levier (66), le levier, l'autre levier et la piste étant disposés de façon que seul le mouvement du levier entre une première et une deuxième positions, qui correspondent aux première et deuxième positions de l'obturateur, produise une rotation de l'autre levier.

10. Appareil de distribution d'air selon l'une des revendications 2 à 9, dans lequel la première sortie (16), la deuxième sortie (18) et la troisième sortie (20) sont destinées à être raccordées à des conduits d'air respectifs qui mènent l'air respectivement à un aérateur situé sensiblement au centre d'une planche de bord de véhicule, à un aérateur situé près d'un plancher de véhicule et à un aérateur situé près d'un pare-brise de véhicule.

11. Appareil de distribution d'air selon la revendication 10, dans lequel le boîtier forme au moins une autre sortie d'air qui communique en permanence avec l'entrée d'air, pour la liaison à des aérateurs situés sur les deux côtés d'une planche de bord de véhicule.

12. Appareil de distribution d'air selon l'une des revendications précédentes, dans lequel le boîtier comprend des parties supérieure et inférieure (6, 8), le montage tournant de l'obturateur étant situé sur des bords coopérants de ces deux parties du boîtier.
